# EUROPEAN PATENT APPLICATION

(11) **EP 4 518 434 A1**
(43) Date of publication of application: **05.03.2025**
(21) Application number: 22940274.8
(22) Date of filing: 28.04.2022
(51) Int. Cl.: H04W 36/32, H04W 4/029, H04W 76/18

(54) **CONNECTION RESTRICTION FOR MOBILE STATION**

(71) Applicant: Rakuten Mobile, Inc., Tokyo 158-0094 (JP)
(72) Inventor: AOYAGI Kenichiro, Tokyo 158-0094 (JP); KITAGAWA Koichiro, Tokyo 158-0094 (JP); SHETE Pankaj, Tokyo 158-0094 (JP); MUHAMMAD Awn, Tokyo 158-0094 (JP)
(74) Representative: Betten & Resch
(86) International application number: PCT/JP2022/019431
(87) International publication number: WO 2023/210001

(57) **Abstract**

A communication control apparatus concerning a moving station capable of communicating with a communication device has at least one processor that performs: by a moving communication device identification unit, identifying a moving communication device that moves with the moving station; and by a connection restriction unit, restricting a connection of the moving communication device with a communication cell where the moving station passes. The moving station comprises a communication-device functional unit that functions as a communication device to the base station, and a base-station functional unit that functions as a base station to a communication device with which the moving station can communicate. The moving station is an IAB (Integrated Access and Backhaul) node, the communication-device functional unit is a MT (Mobile Termination), and the base-station functional unit is a DU (Distributed Unit).

## Description

### BACKGROUND OF THE INVENTION

### 1. Field of the Invention

The present disclosure relates to communication control technology in wireless communication system.

### 2. Description of the Related Art

The number, types, and applications of wireless communication devices, represented by smartphones and Internet of Things (IoT) devices, continue to increase, and wireless communication standards continue to be expanded and improved. For example, the commercial service of the fifth generation mobile communication system known as "5G" started in 2018, and the standards are still being developed by the 3GPP (Third Generation Partnership Project). Efforts are also underway to develop standards for "6G" or the sixth generation mobile communication system, which would be the next generation of wireless communication standards following 5G.

Mobile communication networks for portable communication devices such as smartphones and cell phones (hereinafter collectively referred to as communication device(s)) are usually constructed by communication cells (hereinafter referred to as terrestrial communication cell(s) or fixed communication cell(s)) provided by base stations statically installed on the ground (hereinafter referred to as terrestrial base station(s) or fixed base station(s)). However, mobile communication cannot be performed outside fixed communication cells, and the quality of mobile communications might be low depending on time and/or place even within fixed communication cells.

To solve these problems, moving stations are being considered to supplement the fixed communication cells provided by the fixed base stations. Possible moving stations are assumed to be something like a communication satellite that itself functions as a base station (hereinafter referred to as a moving base station) or something like a repeater that communicates with an existing fixed base station to expand an existing fixed communication cell (hereinafter referred to as a relay station).

Patent Literature 1: JP-A-2006-352894

### SUMMARY OF THE INVENTION

The inventor independently recognized an issue when a moving station passes through other communication cells such as fixed communication cells. For example, if a moving station is installed to a bus, communication devices used by passengers of the bus are mainly connected to the moving station, but they may be temporarily connected to other communication cells (outside the bus) where the bus passes. However, the communication devices inside the bus after passing by such other communication cells must immediately reconnect to the original moving station. Therefore, resources are unnecessarily wasted by the communication device, a base station such as a fixed base station and the moving station etc.

The present disclosure was made in consideration of this situation, and its purpose is to provide a communication control apparatus etc. that can improve the efficiency of communication control for a moving station.

In order to solve the above problem, a communication control apparatus in a certain aspect of the present disclosure concerning a moving station capable of communicating with a communication device comprises at least one processor that performs: by a moving communication device identification unit, identifying a moving communication device that moves with the moving station; and by a connection restriction unit, restricting a connection of the moving communication device with a communication cell where the moving station passes.

According to this aspect, the connection between a communication cell where the moving station passes and the moving communication device that moves with the moving station is restricted. Even if the moving communication device that moves with the moving station happens to be temporarily connected to a communication cell where the moving station passes, it will be disconnected in a short time. As such, unnecessary waste of resources by the communication device, the base station that provides the communication cell where the moving station passes and the moving station can be reduced, by restricting such a connection between such a communication cell and the moving communication device.

Another aspect of the present disclosure is also a communication control apparatus. The apparatus concerning a moving station capable of communicating with a communication device comprises at least one processor that performs: by a connection restriction unit, excluding a communication cell where the moving station passes from the handover candidates of a moving communication device that moves with the moving station from a moving communication cell by the moving station.

Further another aspect of the present disclosure is a communication control method. The method concerning a moving station capable of communicating with a communication device comprises: identifying a moving communication device that moves with the moving station; and restricting a connection of the moving communication device with a communication cell where the moving station passes.

Further another aspect of the present disclosure is a computer-readable medium. The computer-readable medium stores a communication control program concerning a moving station capable of communicating with a communication device causing a computer to perform: identifying a moving communication device that moves with the moving station; and restricting a connection of the moving communication device with a communication cell where the moving station passes.

In addition, any combination of the above components, and any conversion of the expression of the present disclosure among methods, devices, systems, recording media, computer programs and the like are also encompassed within this disclosure.

According to the present disclosure, the efficiency of communication control for a moving station can be improved.

### BRIEF DESCRIPTION OF THE DRAWINGS

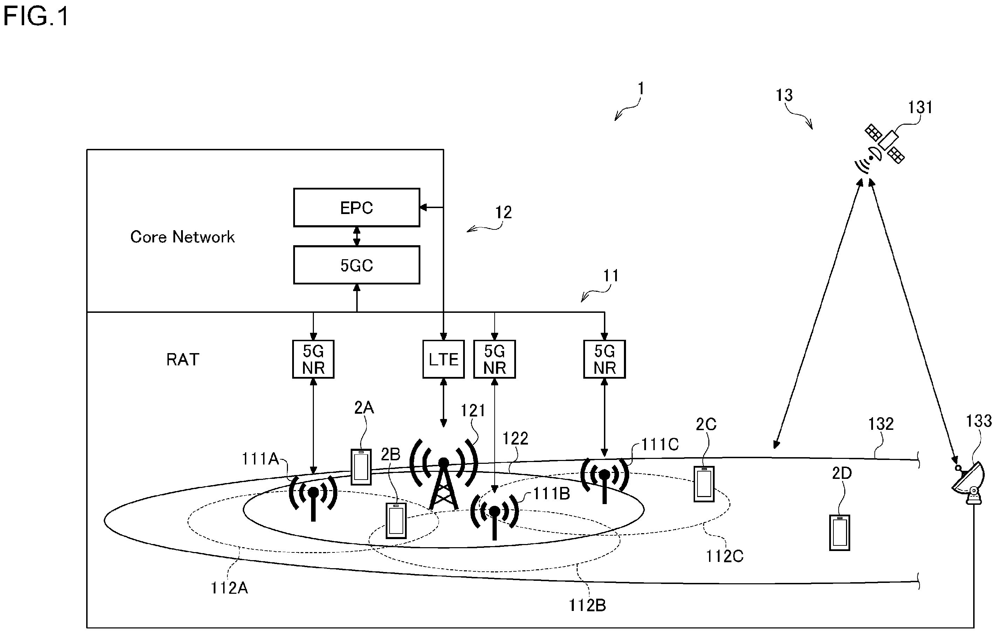

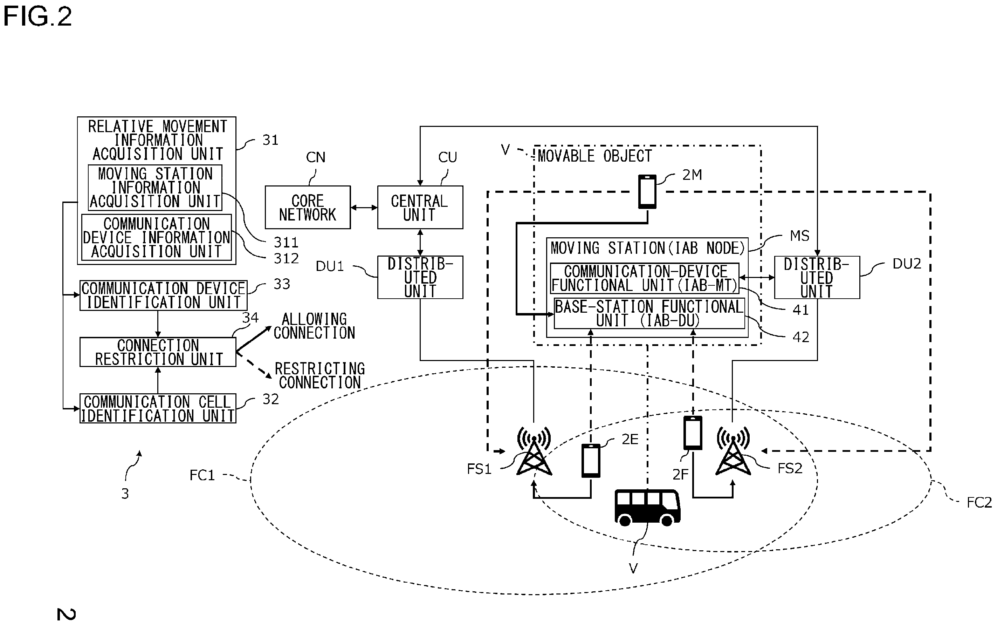

Figure 1 schematically shows the overview of a wireless communication system to which the communication control apparatus is applied. Figure 2 is a functional block diagram of the communication control apparatus.

### DETAILED DESCRIPTION OF THE INVENTION

Figure 1 schematically shows an overview of a wireless communication system 1 to which the communication control apparatus according to an embodiment of the present disclosure is applied. The wireless communication system 1 includes 5G wireless communication system 11, 4G wireless communication system 12, and satellite communication system 13. 5G wireless communication system 11 that complies with the fifth generation mobile communication system (5G) uses NR (New Radio) or 5G NR (Fifth Generation New Radio) as the radio access technology (RAT) and 5GC (Fifth Generation Core) as the core network. 4G wireless communication system 12 that complies with the fourth generation mobile communication system (4G) uses LTE (Long Term Evolution) or LTE-Advanced as the radio access technology and EPC (Evolved Packet Core) as the core network. Satellite communication system 13 is for satellite communication via communication satellite 131. Although not shown in the figure, the wireless communication system 1 may include wireless communication networks of a generation prior to 4G, a generation later than 5G (e.g. 6G), or any wireless communication networks that are not associated with generations, such as Wi-Fi (registered trademark).

The 5G wireless communication system 11 may include a plurality of 5G base stations 111A, 111B, and 111C (hereinafter collectively referred to as 5G base station 111) installed on the ground capable of communicating by 5G NR with communication devices or communication devices 2A, 2B, 2C, and 2D (hereinafter collectively referred to as communication device(s) 2) such as smartphones, which are also referred to as UE (User Equipment). 5G base station 111 is also referred to as gNodeB (gNB). The coverage or support range of each 5G base station 111A, 111B and 111C is referred to as a cell 112A, 112B and 112C (hereinafter collectively referred to as 5G cell 112).

The size of the 5G cell 112 of each 5G base station 111 is arbitrary, but typically ranges from a few meters to several tens of kilometers in radius. Although there is no established definition, cells with a radius of a few meters to ten meters are called femtocells, cells with a radius of ten meters to several tens of meters are called picocells, cells with a radius of several tens of meters to several hundred meters are called microcells, and cells with a radius of more than several hundreds of meters are called macrocells. In 5G, high frequency radio waves such as millimeter waves are often used, and their high tendency to propagate in a straight-line causes radio waves to be blocked by obstacles, shortening the communication distance. For this reason, 5G tends to use more small cells than 4G and earlier generations.

The communication device 2 can conduct 5G communication when it is located within at least one of a plurality of 5G cells 112A, 112B and 112C. In the example shown in the figure, communication device 2B in 5G cells 112A and 112B can communicate with both 5G base stations 111A and 111B by 5G NR. In addition, the communication device 2C in the 5G cell 112C can communicate with the 5G base station 111C by 5G NR. Communication device 2A and 2D are outside of all 5G cells 112A, 112B and 112C, so they are not able to communicate by 5G NR. The 5G NR-based 5G communication between each communication device 2 and each 5G base station 111 is managed by the 5GC, which is the core network. For example, the 5GC transfers data to and from each 5G base station 111, transfers data to and from external networks such as the EPC, the satellite communication system 13 and the Internet, and manages the movement of the communication device 2.

The 4G wireless communication system 12 comprises a plurality of 4G base stations 121 (only one of them is shown in Figure 1) installed on the ground that can communicate with the communication device 2 by LTE or LTE-Advanced. The base station 121 in 4G is referred to as eNodeB (eNB). Similar to each 5G base station 111, the communication range or support range of each 4G base station 121 is also called a cell and is shown as 122.

The communication device 2 can conduct 4G communication when it is located within 4G cell 122. In the example shown in the figure, the communication devices 2A and 2B in the 4G cell 122 can communicate with the 4G base station 121 by LTE or LTE-Advanced. Communication device 2C and 2D are outside the 4G cell 122 and are not able to communicate by LTE or LTE-Advanced. The 4G communication by LTE and LTE-Advanced between each communication device 2 and each 4G base station 121 is managed by the EPC, which is the core network. For example, the EPC manages the transfer of data to and from each 4G base station 121, the transfer of data to and from external networks such as 5GC, the satellite communication system 13 and the Internet, and the movement management of the communication device 2.

If we take a look at each communication device 2A, 2B, 2C and 2D in the example shown in the figure, the communication device 2A is in a state that enables 4G communication with 4G base station 121, and communication device 2B is in a state that enables 5G communication with 5G base stations 111A and 111B and 4G communication with 4G base station 121, and communication device 2C is in a state that enables 5G communication with 5G base station 111C. When there are multiple base stations (111A, 111B and 121) as in the case of communication device 2B, one base station is selected as the most suitable for the communication device 2B in terms of communication quality etc., under the control of the 5GC and/or the EPC, which is the core network. For the communication device 2D that is not in a state that enables 5G communication with any 5G base station 111 or 4G communication with any 4G base station 121, the communication is conducted using the satellite communication system 13 described below.

The satellite communication system 13 is the wireless communication system using communication satellites 131 as non-terrestrial base stations. The communication satellites 131 are low-earth-orbit satellites flying in low-earth-orbit outer space of 500 to 700 km above the ground. Similar to 5G base station 111 and 4G base station 121, the communication range or support range of each communication satellite 131 is also called a cell and is shown as 132. Thus, a communication satellite 131 as a non-terrestrial base station provides a satellite communication cell 132 as a non-terrestrial communication cell onto the ground. Communication device 2 on the ground can conduct satellite communication when it is inside the satellite communication cell 132. Similar to 5G base station 111 in the 5G wireless communication system 11 and 4G base station 121 in the 4G wireless communication system 12, communication satellite 131 as the base station in the satellite communication system 13 is capable of wireless communication directly or indirectly via aircraft etc. with the communication device 2 within the satellite communication cell 132. The radio access technology used by the communication satellite 131 for wireless communication with the communication device 2 in the satellite communication cell 132 may be 5G NR, the same as the 5G base station 111, or LTE or LTE-Advanced, the same as the 4G base station 121, or any other radio access technology that the communication device 2 can use. Therefore, there is no need for the communication device 2 to have any special functions or components for satellite communication.

The satellite communication system 13 is equipped with a gateway 133 as a ground station that is installed on the ground and can communicate with the communication satellite 131. The gateway 133 is equipped with a satellite antenna to communicate with the communication satellite 131, and is connected to the 5G base station 111 and the 4G base station 121 as terrestrial base stations that constitute the terrestrial network (TN). In this way, the gateway 133 connects the non-terrestrial network (NTN), which is comprising communication satellites 131 as a non-terrestrial base station or a satellite base station, and the terrestrial network TN, which is comprising terrestrial base stations 111 and 121, for mutual communication. When the communication satellite 131 conducts 5G communication with the communication device 2 in the satellite communication cell 132 by 5G NR, the 5GC connected via the gateway 133 and the 5G base station 111 in the TN (or the 5G radio access network) is used as the core network. When the communication satellite 131 conducts 4G communication with the communication device 2 in the satellite communication cell 132 by LTE or LTE-Advanced, the EPC connected via the gateway 133 and the 4G base station 121 in the TN (or the 4G radio access network) is used as the core network. In this way, appropriate coordination is made between different wireless communication systems such as 5G wireless communication system 11, 4G wireless communication system 12, satellite communication system 13 etc. through the gateway 133.

Satellite communication by communication satellites 131 is mainly used for covering areas with no or few terrestrial base stations such as 5G base stations 111 and 4G base stations 121 etc. In the example shown in the figure, a communication device 2D that is outside the communication cells of all the terrestrial base stations communicates with the communication satellite 131. On the other hand, communication devices 2A, 2B and 2C that are in good communication with either of the terrestrial base stations, are also in the satellite communication cell 132 and can communicate with the communication satellite 131. However, by communicating with the terrestrial base stations instead of the communication satellite 131 as the satellite base station in principle, the limited communication resources (including power) of the communication satellite 131 are saved for the communication device 2D etc. The communication satellite 131 uses beamforming to direct the communication signal to the communication device 2D in the satellite communication cell 132, thereby the communication quality with the communication device 2D is improved.

The size of the satellite communication cell 132 of the communication satellite 131 as a satellite base station depends on the number of beams emitted by the communication satellite 131. For example, a satellite communication cell 132 with a diameter of about 24 km can be formed by combining up to 2,800 beams. As illustrated, a satellite communication cell 132 is typically larger than a terrestrial communication cell such as a 5G cell 112 or a 4G cell 122, and could contain one or more 5G cells 112 and/or 4G cells 122 inside it. The above example shows a communication satellite 131 flying in low-earth-orbit outer space at a height of about 500 km to 700 km above the ground as a flying non-terrestrial base station. However, a communication satellite flying in geostationary orbit or other higher orbit in outer space, or an unmanned or manned aircraft flying in stratosphere or other lower (e.g. about 20 km above the ground) atmosphere may be used as a non-terrestrial base station in addition to or instead of the communication satellite 131.

As shown in Figure 1, the wireless communication system 1 is usually constructed by the terrestrial communication cells 112, 122 (hereinafter referred to as fixed communication cells FC) provided by terrestrial base stations 111, 121 stationarily installed on the ground (hereinafter referred to as fixed base stations FS). However, mobile communication cannot be performed outside fixed communication cells FC, and the quality of mobile communications might be low depending on time and/or place even within fixed communication cells FC. Although the wireless communication system 1 can also include the satellite communication system 13 that uses the communication satellite 131 as a non-terrestrial base station or moving base station, it is impractical to supplement the terrestrial network of terrestrial base stations 111, 121 solely by the communication satellites 131.

To solve these problems, as schematically shown in Figure 2, moving stations MS are preferably introduced to supplement the fixed communication cells FC provided by the fixed base stations FS. Examples of moving stations MS include a moving base station such as the communication satellite 131 that itself functions as a base station and something like a repeater that communicates with an existing fixed base station FS to expand an existing fixed communication cell FC (hereinafter referred to as a relay station). The moving station MS in the example in Figure 2 is an IAB (Integrated Access and Backhaul) node.

IAB is a technology specified in 5G to expand a communication cell of a parent node, utilizing wireless backhaul between a base station that serves as an IAB donor (parent node) and an IAB node (child node) and/or between parent and child IAB nodes (where an IAB node closer to the IAB donor is the parent node, and an IAB node far from the IAB donor is the child node). Here, "expansion of a communication cell" includes not only expanding the area covered by an existing communication cell, but also improving the communication quality of at least part of an existing communication cell. Furthermore, "expansion of the area covered by a communication cell" includes not only expanding the area in the horizontal plane of an existing communication cell, but also expanding an existing communication cell vertically, e.g. underground or to the upper and/or lower floors of a building.

In Figure 2, the moving station MS as the IAB node comprises a communication-device functional unit 41 that functions as a communication device for the parent node including fixed base station FS and a base-station functional unit 42 that functions as a base station for a communication device 2 with which the moving station MS can communicate. In 5G, the communication-device functional unit 41 is specified as a MT (Mobile Termination) or IAB-MT, and the base-station functional unit 42 is specified as a DU (Distributed Unit) or IAB-DU. It should be noted that, in other wireless communication systems including generations after 5G, functions similar to IAB, MT, DU, CU (Central Unit described below) may be provided under different names, but such similar functions may be used as IAB, MT, DU, CU in the present embodiment.

Two fixed base stations FS1 and FS2 are illustrated in Figure 2. The first fixed base station FS1 provides the first fixed communication cell FC1 and the second fixed base station FS2 provides the second fixed communication cell FC2. In the example in Figure 2, the baseband function of each fixed base station FS1 and FS2 is divided into a central unit (CU) on the core network CN side and a distributed unit (DU) on the communication device 2 side. The first distributed unit DU1 of the first fixed base station FS1 is provided near the radio equipment such as an antenna of the first fixed base station FS1, typically in the same base station facility as the radio equipment. The second distributed unit DU2 of the second fixed base station FS2 is provided near the radio equipment such as an antenna of the second fixed base station FS2, typically in the same base station facility as the radio equipment. Although the central unit CU in the example shown in the figure is shared by the first fixed base station FS1 (the first distributed unit DU1) and the second fixed base station FS2 (the second distributed unit DU2), separate central units may be provided for each of the fixed base stations FS1 and FS2. The central unit CU is connected to the core network CN. The connection between the radio equipment such as an antenna in each of the fixed base stations FS1, FS2 and each of the distributed units DU1, DU2, the connection between each of the distributed units DU1, DU2 and the central unit CU, and the connection between the central unit CU and the core network CN, are typically wired by conductors and/or optical fibers etc., although some or all of those connections may be wireless.

The communication-device functional unit 41 (IAB-MT) of the moving station MS, depending on the position of the moving station MS, can connect wirelessly with the distributed unit DU of either fixed base station FS. In the example in Figure 2, the communication-device functional unit 41 is connected wirelessly to the second distributed unit DU2 of the second fixed base station FS2. In this case, the moving station MS functions as a child node for the second fixed base station FS2 as a parent node or an IAB donor, and expands the second fixed communication cell FC2 by the second fixed base station FS2 as a parent node. Then, the base-station functional unit 42 (IAB-DU) of the moving station MS provides a moving communication cell (not shown) as expanded communication cell of the second fixed communication cell FC2 to the communication device 2. In the example in Figure 2, three communication devices 2E, 2F, 2M (also collectively referred to as communication device 2) in positions where they can be connected to the base-station functional unit 42 of the moving station MS are schematically shown.

All of the communication devices 2E, 2F, 2M are located inside the overlapping area of the first fixed communication cell FC1, the second fixed communication cell FC2, and the moving communication cell by the moving station MS (the expanded communication cell of the second fixed communication cell FC2 in the example of Figure 2). As such, the communication devices 2E, 2F, 2M are capable of connecting to any of the first fixed base station FS1, the second fixed base station FS2, and the moving station MS (the base-station functional unit 42). However, as described below, the communication device 2E located near the first fixed base station FS1 and also outside the movable object V to which the moving station MS is installed, is preferentially connected to the first fixed base station FS1, and the communication device 2F located near the second fixed base station FS2 and also outside the movable object V to which the moving station MS is installed, is preferentially connected to the second fixed base station FS2. Besides, the communication device 2M (hereinafter also referred to as moving communication device 2M) inside the movable object V to which the moving station MS is installed, is preferentially connected to the moving station MS (the base-station functional unit 42). It should be noted that communication devices 2 such as the communication devices 2E and 2F that don't move with the moving station MS and/or the movable object V, are hereinafter also referred to as non-moving communication devices 2, outside-movable-object communication devices 2, outside-moving-station communication devices 2 etc. for convenience, in order to distinguish them from the moving communication device 2M that moves with the moving station MS and/or the movable object V.

The moving station MS is attached to a movable object V, except when it can move (or fly) autonomously like the communications satellite 131. A movable object V is any movable thing or person and includes, for example, automobiles, trains, motorcycles, bicycles, airplanes, ships, and any other vehicles. The moving station MS may be a communication device 2 used by a moving person, for example, a communication device 2 equipped with a tethering function and/or personal hotspot function. Since such a communication device 2 (moving station MS) usually functions as a wireless LAN access point, the RAT (e.g. 5G NR) used by the base station to be expanded (e.g. the second fixed base station FS2) and the RAT used by the expanding moving station MS may be different. In the present embodiment, the moving station MS is installed to the bus V as a movable object.

The inventor independently recognized an issue when the moving station MS (the movable object V) passes through other communication cells such as the fixed communication cells FC1 and FC2. Specifically, when the moving station MS (the movable object V) passes through the vicinity of the outside-movable-object communication devices 2 (the outside-movable-object communication device 2E connected to the first fixed communication cell FC1 and/or the outside-movable-object communication device 2F connected to the second fixed communication cell FC2 in the example of Figure 2) connected to such other communication cells, these outside-movable-object communication device 2E, 2F etc. may be temporarily connected to the moving station MS (the base-station functional unit 42). However, the outside-movable-object communication device 2E, 2F etc. after the moving station MS (the movable object V) passes by must immediately reconnect to the original communication cells FC1, FC2 etc. Therefore, resources are unnecessarily wasted by the outside-movable-object communication device 2E, 2F etc., base stations such as the fixed base stations FS1, FS2 and the moving station MS etc.

Besides, in case the moving station MS is installed to a movable object such as the bus V as in the example of Figure 2, the moving communication devices 2M used by passengers etc. of the bus V are mainly connected to the moving station MS (the base-station functional unit 42), but they may be temporarily connected to other communication cells FC1, FC2 etc. (outside the bus V) where the bus V passes. However, the moving communication devices 2M inside the bus V after passing by such other communication cells FC1, FC2 etc. must immediately reconnect to the original moving station MS (the base-station functional unit 42). Therefore, resources are unnecessarily wasted by the moving communication device 2M, base stations such as the fixed base stations FS1, FS2 and the moving station MS etc. In order to solve the above issues, the main purpose of the present embodiment described below is to provide the communication control apparatus 3 that can improve the efficiency of communication control for the moving station MS.

The communication control apparatus 3 comprises a relative movement information acquisition unit 31, a communication cell identification unit 32, a communication device identification unit 33, and a connection restriction unit 34. Some of these functional blocks can be omitted as long as the communication control apparatus 3 realizes at least some of the operations and/or effects described below. These functional blocks are realized by the cooperation of hardware resources, such as the central processing unit, memory, input devices, output devices, and peripheral devices connected to the computer, and software that is executed using them. Regardless of the type of computer or its installation location, each of the above functional blocks may be realized with the hardware resources of a single computer, or by combining hardware resources distributed across multiple computers. Especially in this embodiment, some or all of functional blocks of the communication control apparatus 3 may be realized in a centralized or distributed manner by computer and/or processor provided in the communication device 2, the moving station MS (including the movable object V), the distributed unit DU1, DU2, the central unit CU, and the core network CN.

The relative movement information acquisition unit 31 (the communication device movement estimation unit) acquires or estimates relative movement information concerning the movement of a communication device 2 relative to the moving station MS (the movable object V). The relative movement information acquisition unit 31 is provided to recognize or estimate the moving communication device 2M that moves with the moving station MS, distinguishing from the non-moving communication devices 2E, 2F etc. that don't move with the moving station MS inside the communication cells FC1, FC2 etc. where the moving station MS passes. For example, the relative movement information acquisition unit 31 acquires the relative distance, the relative speed, the relative acceleration etc. between each communication device 2 and the moving station MS to recognize whether or not each communication device 2 is moving significantly relative to the moving station MS. For example, a communication device 2 whose relative distance to the moving station MS is substantially constant or less than a predetermined value, and/or a communication device 2 whose relative speed and/or relative acceleration relative to the moving station MS is substantially zero, can be recognized as the moving communication device 2M that is not moving significantly relative to the moving station MS. On the other hand, a communication device 2 whose relative distance to the moving station MS is varying or more than a predetermined value, and/or a communication device 2 whose relative speed and/or relative acceleration relative to the moving station MS is substantially non-zero, can be recognized as the non-moving communication device 2E, 2F etc. that is moving significantly relative to the moving station MS.

The relative movement information acquisition unit 31 may directly acquire movement information concerning the movement of at least one of the moving station MS (the movable object V) and the communication device 2. For this purpose, the relative movement information acquisition unit 31 may be equipped with a moving station information acquisition unit 311 (a movement information acquisition unit) that acquires movement information concerning the movement of the moving station MS (the movable object V) and/or a communication device information acquisition unit 312 that acquires movement information concerning the movement of the communication device 2.

The moving station information acquisition unit 311 acquires movement information concerning the movement of the moving station MS installed to the bus V. The movement information includes at least one of the following: the movement route of the bus V and/or the moving station MS, the arrival time of the bus V and/or the moving station MS at each location on the movement route, the traffic condition on the movement route, the movement speed of the bus V and/or the moving station MS, the movement direction of the bus V and/or the moving station MS, and the current position of the bus V and/or the moving station MS. Some or all of this movement information can be acquired from the bus V and/or the moving station MS itself, the moving communication device 2M used by a person traveling in the bus V, a movement instruction device (not shown) that remotely gives movement instruction to the bus V etc. For example, the movement route, the arrival time at each location on the movement route, and the traffic condition on the movement route can be acquired from map applications and/or navigation applications installed in the bus V, the moving station MS, the moving communication device 2M, the movement instruction device etc. Besides, the movement speed, the movement direction, and the current position can be acquired from a positioning module such as a GPS module installed in the bus V, the moving station MS, the moving communication device 2M etc.

The moving station information acquisition unit 311 may estimate some or all of the current movement information of the moving station MS installed to the bus V based on various information collected for the bus V and/or the moving station MS. For example, the moving station information acquisition unit 311 can acquire various information useful in estimating the current movement information of the bus V and/or the moving station MS, from the NWDAF (Network Data Analytics Function) and/or the LMF (Location Management Function) introduced in the 5GC as the core network CN of 5G. The NWDAF is responsible for collecting and analyzing data on the network including 5G network. Specifically, the NWDAF collects and accumulates activity history information (including history information on the base station to which the communication device 2, the moving station MS and/or the bus V were connected, and/or the location of the communication device 2, the moving station MS and/or the bus V) on various activities performed on the network by a number of communication devices 2, the moving stations MS and/or the buses V connected to the network, and utilizes the analysis results for traffic control on the network, for example. The LMF manages the physical location of a number of communication devices 2, the moving stations MS and/or the buses V on the network including 5G network. In other wireless communication systems, including those of later generations than 5G, functions similar to the NWDAF and/or the LMF might be provided under different names. Such similar functions may be used in the present embodiment in place of or in addition to the NWDAF and/or the LMF.

The moving station information acquisition unit 311 may acquire activity history information etc. useful in estimating the current movement information of the bus V and/or the moving station MS, from servers used by service providers that provide map services, navigation services, location tracking services etc. for a large number of communication devices 2, the moving stations MS and/or the buses V connected to the network. In these servers, the activity history information related to the various activities performed in connection with the services provided to the many communication devices 2, the moving stations MS and/or the buses V connected to the network (including history information on the location of the communication device 2, the moving station MS and/or the bus V) can be collected.

The communication device information acquisition unit 312 acquires movement information concerning the movement of the communication device 2. The movement information includes at least one of the following: the movement route of the communication device 2, the arrival time of the communication device 2 at each location on the movement route, the traffic condition on the movement route, the movement speed of the communication device 2, the movement direction of the communication device 2, and the current position of the communication device 2. Some or all of this movement information can be acquired from the communication device 2 itself. For example, the movement route, the arrival time at each location on the movement route, and the traffic condition on the movement route can be acquired from map applications and/or navigation applications installed in the communication device 2. Besides, the movement speed, the movement direction, and the current position can be acquired from a positioning module such as a GPS module installed in the communication device 2.

The communication device information acquisition unit 312 may estimate some or all of the current movement information of the communication device 2 based on various information collected for the communication device 2. For example, the communication device information acquisition unit 312 can acquire various information useful in estimating the current movement information of the communication device 2 from the NWDAF and/or the LMF. Besides, the communication device information acquisition unit 312 may acquire activity history information etc. useful in estimating the current movement information of the communication device 2, from servers used by service providers that provide map services, navigation services, location tracking services etc. for a large number of communication devices 2 connected to the network.

As described above, the relative movement information acquisition unit 31 can recognize whether or not there is substantial movement of the communication device 2 relative to the moving station MS (the movable object V) based on the movement information of the moving station MS (the movable object V) acquired by the moving station information acquisition unit 311 and/or the movement information of the communication device 2 acquired by the communication device information acquisition unit 312. It should be noted that even if the relative movement information acquisition unit 31 does not directly acquire the movement information of the moving station MS (the movable object V) and the communication device 2 (i.e. without the moving station information acquisition unit 311 and the communication device information acquisition unit 312), it can recognize whether or not there is substantial movement of the communication device 2 relative to the moving station MS (the movable object V). For example, if a user of the communication device 2 checks-in using the communication device 2 etc. when boarding the bus V (e.g. if the communication device 2 is held or "touch" over a contactless reader provided at the boarding entrance of the bus V) and/or if a ticket for the bus V is purchased online using the communication device 2 etc., such communication device 2 corresponding to the boarding information and/or boarding record is strongly suggested to be the moving communication device 2M that does not move relative to the moving station MS (the movable object V).

The communication cell identification unit 32 identifies the communication cell FC1, FC2 etc. where the moving station MS (the movable object V) passes. For example, the communication cell identification unit 32 identifies the communication cell FC1, FC2 etc. where the moving station MS (the movable object V) passes, based on the movement information of the moving station MS (the movable object V) acquired by the moving station information acquisition unit 311 (the movement information acquisition unit). Specifically, the communication cell FC1, FC2 etc. where the moving station MS (the movable object V) is currently passing through and/or communication cells where the moving station MS (the movable object V) is going to pass at a future time can be identified, by comparing the placement information etc. of each communication cell managed by the core network CN and/or the central unit CU etc., and the movement information of the of the moving station MS (the movable object V) acquired by the moving station information acquisition unit 311.

The communication device identification unit 33 (the moving communication device identification unit) identifies the moving communication device 2M that moves with the moving station MS (the movable object V) and/or the non-moving communication device 2E, 2F etc. that don't move with the moving station MS inside the communication cell FC1, FC2 etc. where the moving station MS (the movable object V) passes. For example, the communication device identification unit 33 identifies the moving communication device 2M and/or the non-moving communication device 2E, 2F etc., based on the movement information relative to the moving station MS (the movable object V) acquired by the relative movement information acquisition unit 31.

The connection restriction unit 34 restricts a connection of the moving station MS with the non-moving communication device 2E, 2F etc. that does not move with the moving station MS (the movable object V) inside the communication cell FC1, FC2 etc. where the moving station MS (the movable object V) passes.

When the moving station MS (the movable object V) passes through the vicinity of the non-moving communication device 2E connected to the first fixed communication cell FC1, the non-moving communication device 2E may be temporarily connected to the moving station MS (the base-station functional unit 42). However, the non-moving communication device 2E after the moving station MS (the movable object V) passes by must immediately reconnect to the original first fixed communication cell FC1. Especially, if the tracking area or the location registration area of the first fixed communication cell FC1 is different from the tracking area or the location registration area of the moving station MS (the base-station functional unit 42) to which the non-moving communication device 2E has been temporarily connected, the power consumption of such non-moving communication device 2E etc. increases due to the frequent occurrence of location registration signals to register in the network side the changes of the tracking area or the location registration area to which the non-moving communication device 2E belongs. Therefore, in the present embodiment, as schematically shown by the dotted line "Restricting Connection", the connection restriction unit 34 restricts a connection of the moving station MS with the non-moving communication device 2E identified by the communication device identification unit 33 inside the first fixed communication cell FC1 identified by the communication cell identification unit 32 where the moving station MS (the movable object V) is currently passing through. Even if the non-moving communication device 2E happens to be temporarily connected to the moving station MS, it will be disconnected in a short time when the moving station MS (the movable object V) moves away. As such, unnecessary waste of resources by the non-moving communication device 2E, the first fixed base station FS1 that provides the first fixed communication cell FC1 where the non-moving communication device 2E is located and the moving station MS (the movable object V) passes and the moving station MS can be reduced, by the connection restriction unit 34 restricting such a connection between the non-moving communication device 2E and the moving station MS. Besides, as schematically shown by the solid line "Allowing Connection", the connection restriction unit 34 causes the non-moving communication device 2E that does not move with the moving station MS (the movable object V) inside the first fixed communication cell FC1 where the moving station MS (the movable object V) passes, to preferentially connect to the first fixed base station FS1 that provides the first fixed communication cell FC1.

Similarly, when the moving station MS (the movable object V) passes through the vicinity of the non-moving communication device 2F connected to the second fixed communication cell FC2, the non-moving communication device 2F may be temporarily connected to the moving station MS (the base-station functional unit 42). However, the non-moving communication device 2F after the moving station MS (the movable object V) passes by must immediately reconnect to the original second fixed communication cell FC2. Especially, if the tracking area or the location registration area of the second fixed communication cell FC2 is different from the tracking area or the location registration area of the moving station MS (the base-station functional unit 42) to which the non-moving communication device 2F has been temporarily connected, the power consumption of such non-moving communication device 2F etc. increases due to the frequent occurrence of location registration signals to register in the network side the changes of the tracking area or the location registration area to which the non-moving communication device 2F belongs. Therefore, in the present embodiment, as schematically shown by the dotted line "Restricting Connection", the connection restriction unit 34 restricts a connection of the moving station MS with the non-moving communication device 2F identified by the communication device identification unit 33 inside the second fixed communication cell FC2 identified by the communication cell identification unit 32 where the moving station MS (the movable object V) is currently passing through. Even if the non-moving communication device 2F happens to be temporarily connected to the moving station MS, it will be disconnected in a short time when the moving station MS (the movable object V) moves away. As such, unnecessary waste of resources by the non-moving communication device 2F, the second fixed base station FS2 that provides the second fixed communication cell FC2 where the non-moving communication device 2F is located and the moving station MS (the movable object V) passes and the moving station MS can be reduced, by the connection restriction unit 34 restricting such a connection between the non-moving communication device 2F and the moving station MS. Besides, as schematically shown by the solid line "Allowing Connection", the connection restriction unit 34 causes the non-moving communication device 2F that does not move with the moving station MS (the movable object V) inside the second fixed communication cell FC2 where the moving station MS (the movable object V) passes, to preferentially connect to the second fixed base station FS2 that provides the second fixed communication cell FC2.

The connection restriction unit 34 may prohibit or deprioritize the connection between the non-moving communication devices 2E, 2F etc. and the moving station MS. For example, accesses by the non-moving communication devices 2E, 2F etc. to the moving communication cell (not shown) provided by the moving station MS, its frequency band, its tracking area or its location registration area may be prohibited or deprioritized. In case the connection restriction unit 34 is provided in a communication device 2, the above prohibition and/or deprioritization of accesses may be performed autonomously by such communication device 2. On the other hand, in case the connection restriction unit 34 is provided on the network side (e.g. the moving station MS, the distributed unit DU, the central unit CU and the core network CN), it may notify the non-moving communication devices 2E, 2F etc. that the connection to the moving station MS is prohibited or deprioritized, it may reject a connection request from the non-moving communication device 2E, 2F etc. to the moving station MS, or it may direct the non-moving communication device 2E, 2F etc. to the base stations FS1, FS2 etc. other than the moving station MS.

The connection restriction unit 34 provided on the network side may prohibit altogether the connection of the non-moving communication devices 2E, 2F etc. to the moving station MS through the handover, by excluding the moving communication cell by the moving station MS from the handover candidates of a communication device 2 (the non-moving communication devices 2E, 2F etc.) from a communication cell FC1, FC2 etc. where the moving station MS (the movable object V) passes. In this case, the processes for each communication device 2, such as the acquisition of movement information etc. of the non-moving communication devices 2E, 2F etc. (by the communication device information acquisition unit 312) and/or the identification of the non-moving communication devices 2E, 2F etc. (by the communication device identification unit 33), may be omitted. Specifically, by excluding the moving communication cell by the moving station MS from the list of handover candidates managed on the network side for each communication cell FC1, FC2 etc. where the moving station MS (the movable object V) passes, the non-moving communication device 2E, 2F etc. connected to such communication cell FC1, FC2 can autonomously recognize by referring to such list that the handover to the moving station MS is prohibited. Therefore, it is not necessary to acquire the movement information etc. of the non-moving communication devices 2E, 2F etc. and/or to identify the non-moving communication devices 2E, 2F etc. in advance. The above access control for each communication device 2 and/or each communication cell may be finely realized by utilizing cell access control technology such as CAG (Closed Access Group) introduced in 5G.

Besides, the connection restriction unit 34 restricts a connection of the moving communication device 2M that moves with the moving station MS (the movable object V) with a communication cell FC1, FC2 etc. where the moving station MS (the movable object V) passes.

The moving communication device 2M used by passenger etc. of the bus V to which the moving station MS is installed, is mainly connected to the moving station MS (the base-station functional unit 42), but it may be temporarily connected to other communication cells FC1, FC2 etc. outside the bus V where the bus V (the moving station MS) passes. However, the moving communication device 2M inside the bus V after passing by such other communication cells FC1, FC2 etc. must immediately reconnect to the original moving station MS (the base-station functional unit 42). Especially, if the tracking area or the location registration area of the moving station MS (the base-station functional unit 42) is different from the tracking areas or the location registration areas of the other communication cells FC1, FC2 etc. outside the bus V to which the moving communication device 2M has been temporarily connected, the power consumption of such moving communication device 2M etc. increases due to the frequent occurrence of location registration signals to register in the network side the changes of the tracking area or the location registration area to which the moving communication device 2M belongs. Therefore, in the present embodiment, as schematically shown by the dotted line "Restricting Connection", the connection restriction unit 34 restricts a connection of the moving communication device 2M identified by the communication device identification unit 33 with the communication cells FC1, FC2 etc. identified by the communication cell identification unit 32 where the moving station MS (the movable object V) is currently passing through. Even if the moving communication device 2M that moves with the moving station MS (the movable object V) happens to be temporarily connected to the communication cells FC1, FC2 etc. where the moving station MS (the movable object V) passes, it will be disconnected in a short time. As such, unnecessary waste of resources by the moving communication device 2M, the base stations FS1, FS2 etc. that provide communication cells FC1, FC2 etc. where the moving station MS (the movable object V) passes and the moving station MS can be reduced, by the connection restriction unit 34 restricting such a connection of the moving communication device 2M. Besides, as schematically shown by the solid line "Allowing Connection", the connection restriction unit 34 causes the moving communication device 2M that moves with the moving station MS (the movable object V), to preferentially connect to the moving station MS (the base-station functional unit 42).

The connection restriction unit 34 may prohibit or deprioritize the connection between the moving communication device 2M inside the bus V and the communication cells FC1, FC2 etc. outside the bus V. For example, accesses by the moving communication device 2M to the communication cells FC1, FC2 etc. outside the bus V, their frequency bands, their tracking areas or their location registration areas may be prohibited or deprioritized. In case the connection restriction unit 34 is provided in the moving communication device 2M, the above prohibition and/or deprioritization of accesses may be performed autonomously by such moving communication device 2M. On the other hand, in case the connection restriction unit 34 is provided on the network side (e.g. the moving station MS, the distributed unit DU, the central unit CU and the core network CN), it may notify the moving communication device 2M that the connection to the communication cells FC1, FC2 etc. outside the bus V is prohibited or deprioritized, it may reject a connection request from the moving communication device 2M to the communication cells FC1, FC2 etc. outside the bus V, or it may direct the moving communication device 2M to the moving station MS (the base-station functional unit 42).

The connection restriction unit 34 provided on the network side may prohibit altogether the connection of the moving communication device 2M to the communication cells FC1, FC2 etc. outside the bus V through the handover, by excluding the communication cells FC1, FC2 etc. outside the bus V from the handover candidates of the moving communication device 2M from the moving communication cell (not shown) by the moving station MS (the base-station functional unit 42). In this case, the processes for each moving communication device 2M, such as the acquisition of movement information etc. of the moving communication device 2M (by the communication device information acquisition unit 312) and/or the identification of the moving communication device 2M (by the communication device identification unit 33), may be omitted. Specifically, by excluding the communication cells FC1, FC2 etc. outside the bus V from the list of handover candidates managed on the network side for the moving communication cell by the moving station MS (the base-station functional unit 42), the moving communication device 2M connected to such moving station MS (the base-station functional unit 42) can autonomously recognize by referring to such list that the handover to the communication cells FC1, FC2 etc. outside the bus V is prohibited. Therefore, it is not necessary to acquire the movement information etc. of the moving communication device 2M and/or to identify the moving communication device 2M in advance. The above access control for each communication device 2 and/or each communication cell may be finely realized by utilizing cell access control technology such as CAG (Closed Access Group) introduced in 5G.

The present disclosure has been described above based on embodiments. It is obvious to those skilled in the art that various variations are possible in the combination of each component and/or each process in the exemplary embodiments, and that such variations are also encompassed within the scope of the present disclosure.

Although an IAB node is exemplified as a moving station MS in the above embodiment, a moving station MS may be a relay station that relays communication signals between a base station (e.g. the fixed base station FS1, FS2 etc.) and a communication device 2, or a moving station MS may be a moving base station (e.g. the communication satellite 131) that can provide a moving communication cell (e.g. the satellite communication cell 132) to the communication device 2.

It should be noted that the structures, the operations, and the functions of each apparatus and/or each method described in the embodiments can be realized by hardware resources or software resources, or by the cooperation of hardware resources and software resources. As hardware resources, for example, processors, ROMs, RAMs and various integrated circuits can be used. As software resources, for example, programs such as operating systems and applications can be used.

The present disclosure may be expressed as the following items.

1. A communication control apparatus concerning a moving station capable of communicating with a communication device comprising at least one processor that performs:
   by a communication cell identification unit, identifying a communication cell where the moving station passes; and
   by a connection restriction unit, restricting a connection of the moving station with a communication device that does not move with the moving station inside the communication cell.
2. The communication control apparatus according to item 1, wherein the moving station is capable of communicating with a base station to expand a communication cell provided by the base station.
3. The communication control apparatus according to item 2, wherein the moving station comprises a communication-device functional unit that functions as a communication device to the base station, and a base-station functional unit that functions as a base station to a communication device with which the moving station can communicate.
4. The communication control apparatus according to item 3,
   wherein
   the moving station is an IAB (Integrated Access and Backhaul) node,
   the communication-device functional unit is a MT (Mobile Termination), and
   the base-station functional unit is a DU (Distributed Unit).
5. The communication control apparatus according to item 2, wherein the moving station is a relay station that relays communication signal between the base station and a communication device.
6. The communication control apparatus according to item 1, wherein the moving station is a moving base station capable of providing a moving communication cell to a communication device.
7. The communication control apparatus according to any of items 1 to 6, wherein
   the at least one processor performs, by a movement information acquisition unit, acquiring movement information concerning the movement of the moving station, and the communication cell identification unit identifies a communication cell where the moving station passes based on the movement information.
8. The communication control apparatus according to any of items 1 to 7, wherein
   the at least one processor performs, by a communication device movement estimation unit, estimating whether a communication device inside the communication cell moves with the moving station, and
   the connection restriction unit restricts a connection of the moving station with a communication device estimated not to move with the moving station inside the communication cell.
9. The communication control apparatus according to any of items 1 to 8, wherein
   the at least one processor performs, by a communication device movement estimation unit, estimating whether a communication device inside the communication cell moves with the moving station, and
   the connection restriction unit causes a communication device estimated to move with the moving station inside the communication cell to connect to the moving station.
10. The communication control apparatus according to any of items 1 to 7, wherein the connection restriction unit excludes the moving communication cell by the moving station from the handover candidates of a communication device from the communication cell.
11. A communication control apparatus concerning a moving station capable of communicating with a communication device comprising at least one processor that performs:
   by a connection restriction unit, excluding a moving communication cell by the moving station from the handover candidates of a communication device from a communication cell where the moving station passes.
12. The communication control apparatus according to any of items 1 to 11, wherein the moving station is installed to a movable object.
13. A communication control method concerning a moving station capable of communicating with a communication device comprising:
   identifying a communication cell where the moving station passes; and
   restricting a connection of the moving station with a communication device that does not move with the moving station inside the communication cell.
14. A computer-readable medium storing a communication control program concerning a moving station capable of communicating with a communication device causing a computer to perform:
   identifying a communication cell where the moving station passes; and
   restricting a connection of the moving station with a communication device that does not move with the moving station inside the communication cell.
15. The communication control apparatus according to any of items 1 to 12, wherein
   the at least one processor performs, by a moving communication device identification unit, identifying a moving communication device that moves with the moving station; and
   the connection restriction unit restricts a connection of the moving communication device with the communication cell.
16. A communication control apparatus concerning a moving station capable of communicating with a communication device comprising at least one processor that performs:
   by a moving communication device identification unit,
   identifying a moving communication device that moves with the moving station; and
   by a connection restriction unit, restricting a connection of the moving communication device with a communication cell where the moving station passes.
17. The communication control apparatus according to item 16, wherein the moving station is capable of communicating with a base station to expand a communication cell provided by the base station.
18. The communication control apparatus according to item 17, wherein the moving station comprises a communication-device functional unit that functions as a communication device to the base station, and a base-station functional unit that functions as a base station to a communication device with which the moving station can communicate.
19. The communication control apparatus according to item 18, wherein
   the moving station is an IAB (Integrated Access and Backhaul) node,
   the communication-device functional unit is a MT (Mobile Termination), and
   the base-station functional unit is a DU (Distributed Unit).
20. The communication control apparatus according to item 17, wherein the moving station is a relay station that relays communication signal between the base station and a communication device.
21. The communication control apparatus according to item 16, wherein the moving station is a moving base station capable of providing a moving communication cell to a communication device.
22. The communication control apparatus according to any of items 15 to 21, wherein
   the at least one processor performs, by a relative movement information acquisition unit, acquiring relative movement information concerning the movement of a communication device relative to the moving station, and
   the moving communication device identification unit identifies the moving communication device based on the relative movement information.
23. The communication control apparatus according to any of items 15 to 22, wherein the connection restriction unit causes the moving communication device to connect to the moving station.
24. The communication control apparatus according to any of items 15 to 23, wherein the connection restriction unit excludes the communication cell where the moving station passes from the handover candidates of the moving communication device from a moving communication cell by the moving station.
25. A communication control apparatus concerning a moving station capable of communicating with a communication device comprising at least one processor that performs:
   by a connection restriction unit, excluding a communication cell where the moving station passes from the handover candidates of a moving communication device that moves with the moving station from a moving communication cell by the moving station.
26. The communication control apparatus according to any of items 16 to 25, wherein the moving station is installed to a movable object.
27. A communication control method concerning a moving station capable of communicating with a communication device comprising:
   identifying a moving communication device that moves with the moving station; and
   restricting a connection of the moving communication device with a communication cell where the moving station passes.
28. A computer-readable medium storing a communication control program concerning a moving station capable of communicating with a communication device causing a computer to perform:
   identifying a moving communication device that moves with the moving station; and
   restricting a connection of the moving communication device with a communication cell where the moving station passes.

The present disclosure relates to communication control technology in wireless communication system.

1 wireless communication system, 2 communication device, 2M moving communication device, 3 communication control apparatus, 11 5G wireless communication system, 12 4G wireless communication system, 13 satellite communication system, 31 relative movement information acquisition unit, 32 communication cell identification unit, 33 communication device identification unit, 34 connection restriction unit, 41 communication-device functional unit, 42 base-station functional unit, 111 5G base station, 112 5G cell, 121 4G base station, 122 4G cell, 131 communication satellite, 132 satellite communication cell, 133 gateway, 311 moving station information acquisition unit, 312 communication device information acquisition unit.

## Claims

1. A communication control apparatus concerning a moving station capable of communicating with a communication device comprising at least one processor that performs:
by a moving communication device identification unit, identifying a moving communication device that moves with the moving station; and
by a connection restriction unit, restricting a connection of the moving communication device with a communication cell where the moving station passes.

2. The communication control apparatus according to claim 1, wherein the moving station is capable of communicating with a base station to expand a communication cell provided by the base station.

3. The communication control apparatus according to claim 2, wherein the moving station comprises a communication-device functional unit that functions as a communication device to the base station, and a base-station functional unit that functions as a base station to a communication device with which the moving station can communicate.

4. The communication control apparatus according to claim 3, wherein
the moving station is an IAB (Integrated Access and Backhaul) node,
the communication-device functional unit is a MT (Mobile Termination), and
the base-station functional unit is a DU (Distributed Unit).

5. The communication control apparatus according to claim 2, wherein the moving station is a relay station that relays communication signal between the base station and a communication device.

6. The communication control apparatus according to claim 1, wherein the moving station is a moving base station capable of providing a moving communication cell to a communication device.

7. The communication control apparatus according to claim 1, wherein
the at least one processor performs, by a relative movement information acquisition unit, acquiring relative movement information concerning the movement of a communication device relative to the moving station, and
the moving communication device identification unit identifies the moving communication device based on the relative movement information.

8. The communication control apparatus according to claim 1, wherein the connection restriction unit causes the moving communication device to connect to the moving station.

9. The communication control apparatus according to claim 1, wherein the connection restriction unit excludes the communication cell where the moving station passes from the handover candidates of the moving communication device from a moving communication cell by the moving station.

10. The communication control apparatus according to claim 1, wherein the moving station is installed to a movable object.

11. A communication control apparatus concerning a moving station capable of communicating with a communication device comprising at least one processor that performs:
by a connection restriction unit, excluding a communication cell where the moving station passes from the handover candidates of a moving communication device that moves with the moving station from a moving communication cell by the moving station.

12. A communication control method concerning a moving station capable of communicating with a communication device comprising:
identifying a moving communication device that moves with the moving station; and
restricting a connection of the moving communication device with a communication cell where the moving station passes.

13. A computer-readable medium storing a communication control program concerning a moving station capable of communicating with a communication device causing a computer to perform:
identifying a moving communication device that moves with the moving station; and
restricting a connection of the moving communication device with a communication cell where the moving station passes.
